# EUROPÄISCHE PATENTSCHRIFT

(11) **EP 1 045 972 B1**
(45) Veröffentlichungstag und Bekanntmachung des Hinweises auf die Patenterteilung: **20.04.2005**
(21) Anmeldenummer: 99960774.0
(22) Anmeldetag: 15.10.1999
(51) Int. Cl.: F02M 37/10

(54) **KRAFTSTOFF-FÖRDERMODUL**
FUEL SUPPLY MODULE
MODULE D'ALIMENTATION DE CARBURANT

(30) Priorität: 21.10.1998 DE 19848571
(43) Veröffentlichungstag der Anmeldung: 25.10.2000
(73) Patentinhaber: ROBERT BOSCH GMBH, 70442 Stuttgart (DE)
(72) Erfinder: FRANK, Kurt, D-73614 Schorndorf (DE)
(74) Vertreter: Hörschler, Wolfram Johannes, Dipl.-Ing.
(86) Internationale Anmeldenummer: PCT/DE1999/003316
(87) Internationale Veröffentlichungsnummer: WO 2000/023705

(56) Entgegenhaltungen:
- EP-A- 0 384 441
- EP-A- 0 754 851
- DE-A- 19 619 992
- US-A- 4 682 936
- US-A- 5 718 208
- PATENT ABSTRACTS OF JAPAN vol. 009, no. 313 (M-437), 10. Dezember 1985 (1985-12-10) & JP 60 147565 A (NISSAN JIDOSHA KK), 3. August 1985 (1985-08-03)
- PATENT ABSTRACTS OF JAPAN vol. 007, no. 287 (M-264), 21. Dezember 1983 (1983-12-21) & JP 58 160545 A (JIDOSHA KOGAI ANZEN KIKI GIJUTSU KENKYU KUMIAI), 24. September 1983 (1983-09-24)

## Beschreibung

Die Erfindung betrifft ein Kraftstoff-Fördermodul zur Förderung von Kraftstoff an eine Verbrennungskraftmaschine, insbesondere zur Verwendung in einem Kraftfahrzeug.

### Stand der Technik

In Kraftfahrzeugen werden zur Förderung des Kraftstoffs aus einem Kraftstofftank an den Motor Kraftstoffpumpen verwendet, die im Innern des Kraftstofftanks installiert sind. Diese Kraftstoffpumpen sind üblicherweise auf dem Boden des Tanks angeordnet und mit einem sogenannten Speichertopf umgeben, durch den der Kraftstoffspiegel unmittelbar um die Kraftstoffpumpe herum auf einem vorgegebenen Niveau gehalten wird. Dadurch wird sichergestellt, daß auch bei teilweise schon leergepumptem Kraftstofftank während einer Kurven- oder Hangfahrt der Motor sicher mit Kraftstoff versorgt wird. Der Speichertopf bildet dabei gemeinsam mit der Kraftstoffpumpe das Kraftstoff-Fördermodul. Um den Speichertopf einerseits mit Kraftstoff aus dem Tank zu befüllen, wird häufig eine Saugstrahlpumpe verwendet, die durch den vom Motor zurückbeförderten Kraftstoff angetrieben wird. Der zurückbeförderte Kraftstoff kann aber auch direkt in den Speichertopf zurückfließen. Ferner weisen Speichertöpfe typischerweise zwei Kraftstoffilter auf, von denen sich der erste saugseitig vor der Kraftstoffpumpe befindet, während der zweite, feinporigere Filter der Kraftstoffpumpe nachgeordnet ist.

Ein Kraftstoffmodul nach dem Oberbegriff des Anspruchs 1 ist beispielsweise in der DE 196 19 992 offenbart. Bei dieser Konstruktion wird die Einbauhöhe der Kraftstoffpumpe innerhalb des Speichertopfs einerseits durch ihre Abmessungen, andererseits durch den vorgeschalteten Grobfilter und einen Saugstutzen bestimmt, mit dem der Kraftstoff durch den Grobfilter hindurch angesaugt wird. Der Saugstutzen ist gemeinsam mit dem Grobfilter oberhalb des Bodens des Speichertopfs angeordnet, so dass der Kraftstoff im wesentlichen von unten senkrecht einströmt.

Bei dieser Anordnung treten jedoch die folgenden Probleme auf. Wenn der Kraftstoffspiegel im Speichertopf unterhalb des Grobfilters liegt, wird die Kraftstoff-Förderpumpe und damit der Motor nicht mehr mit Kraftstoff versorgt. Analog zu diesem schlechten Restabsaugverhalten ergeben sich Probleme bei der Erstbefüllung des Tanks bzw. des Speichertopfs, da auch in diesem Fall zuerst ein Mindestspiegel an Kraftstoff im Speichertopf vorhanden sein muss, bevor die Kraftstoff-Förderpumpe ihren Betrieb aufnehmen kann.

In der US 5,718,208 wird ein Kraftstoff-Fördermodul für ein Kraftfahrzeug beschrieben. Dazu ist im Speichertopf, der im Tank eines Kraftfahrzeuges untergebracht ist, eine Kraftstoffpumpe vorgesehen. Neben der Kraftstoffpumpe ist eine Röhre aufgenommen, mit welcher sich Kraftstoffgasblasen vom flüssigen Kraftstoff trennen lassen. Damit sollen eine negative Beeinflussung der Pumpleistung sowie störende Pumpgeräusche vermieden werden. Die Kraftstoffpumpe ist auf einem Isolierelement angeordnet, das gemeinsam mit dem Gehäuse der Pumpe eine Einströmöffnung für den Kraftstoff bildet, der somit seitlich in die Kraftstoffpumpe einströmt. Da jedoch die beschriebene Vorrichtung zur Trennung der Gasbläschen vom flüssigen Kraftstoff unterhalb des Pumpenrades angeordnet ist, führt dies zu einer gewissen Mindesthöhe des Pumpenrades oberhalb des Bodens des Speichertopfes. Ein seitliches Zuströmen zu dem an dieser Stelle angebrachten Pumpenrad würde das Restabsaugverhalten des Kraftstoff-Fördermoduls deutlich verschlechtern, da bei einem Kraftstoffpegel unterhalb der Einbauhöhe des Pumpenrades kein Kraftstoff mehr in die Pumpe gelangen könnte.

US 4,682,936 bezieht sich auf eine Kraftstoffpumpe. Bei dieser Kraftstoffpumpe liegen eine Saugöffnung 22 einer Abdeckung und eine Saugöffnung eines Pumpengehäuses in einer Winkeldistanz zueinander. Die Abdeckung 22 wird von einem Kraftstofffilterelement abgedeckt, welches zur Unterseite der Abdeckung 22 beabstandet aufgenommen ist.

Dadurch wird die Entzündungsgefahr des Kraftstoffs aufgrund von Funkenflug vom Kollektor des die Kraftstoffpumpe antreibenden Motors erheblich herabgesetzt.

EP 0 754 851 A1 bezieht sich auf eine Brennstofffördereinrichtung für Brennkraftmaschinen mit einer Innentankpumpe, einem Brennstofffilter, einem Druckregler und einer Rückströmleitung mit Überdruckventil. Die Rückströmleitung zweigt stromauf von einer Druckleitung des Brennstofffilters ab und führt in den Brennstofftank.

### Vorteile der Erfindung

Das erfindungsgemäße Kraftstoff-Fördermodul mit den Merkmalen des Anspruchs 1 hat den Vorteil, dass der erforderliche Mindestspiegel an Kraftstoff im Speichertopf sehr niedrig ist. Daraus resultiert ein hervorragendes Restabsaugverhalten des Kraftstoffmoduls ebenso wie ein günstigeres Verhalten bei der ersten Befüllung des Tanks. Ferner fällt die Konstruktion der Kraftstoffpumpe kostengünstiger aus, da auf den Saugstutzen verzichtet Einwirkungen von Schwingungen, wie sie in einem Kraftfahrzeug typischerweise auftreten, reduzieren.

Durch die in den weiteren Ansprüchen aufgeführten Maßnahmen sind vorteilhafte Weiterbildungen und Verbesserungen des in Anspruch 1 angegebenen Kraftstoff-Fördermoduls möglich.

Gemäß einer bevorzugten Ausführungsform umfaßt die Kraftstoffpumpe ein Gehäuse, das eine seitliche Einströmöffnung aufweist, die im unteren Bereich des Speichertopfes angeordnet ist, um noch geringste Restmengen an Kraftstoff im Speichertopf ansaugen zu können. Die Einströmöffnung des Gehäuses ist dabei vorzugsweise unmittelbar am Boden des Speichertopfes angeordnet. Gemäß einer weiteren bevorzugten Ausführungsform wird die Einströmöffnung an ihrer Unterseite von einem Teil des Gehäuses der Kraftstoffpumpe begrenzt.

Das Kraftstoffmodul weist ferner bevorzugt einen Filter auf, das im Speichertopf angeordnet ist, um den Kraftstoff vor dem Einströmen zu filtern. Vorzugsweise ist der Filter als ein Korbfilter ausgebildet, das die Kraftstoffpumpe umgibt. Gemäß einer bevorzugten Ausführungsform dient der Korbfilter dazu, die Kraftstoffpumpe im Speichertopf abzustützen. Zusätzliche Vorrichtungen zur Abstützung der Kraftstoffpumpe im oberen Bereich sind in dieser Ausführungsform nicht notwendig.

### Zeichnung

Die Erfindung ist anhand mehrerer, in der Zeichnung dargestellten Ausführungsformen in der folgenden Beschreibung näher erläutert. Es zeigen:
- Fig. 1:: eine Seitenansicht des Kraftstoff-Fördermoduls gemäß einer ersten Ausführungsform;
- Fig. 2:: eine vergrößerte Darstellung des unteren Bereichs der Kraftstoffpumpe gemäß einer weiteren bevorzugten Ausführungsform;
- Fig. 3:: eine schematische Darstellung des Kraftstoffmoduls gemäß einer weiteren Ausführungsform; und
- Fig. 4:: eine schematische Darstellung des Kraftstoffmoduls gemäß einer weiteren Ausführungsform.

### Detaillierte Beschreibung von bevorzugten Ausführungsformen

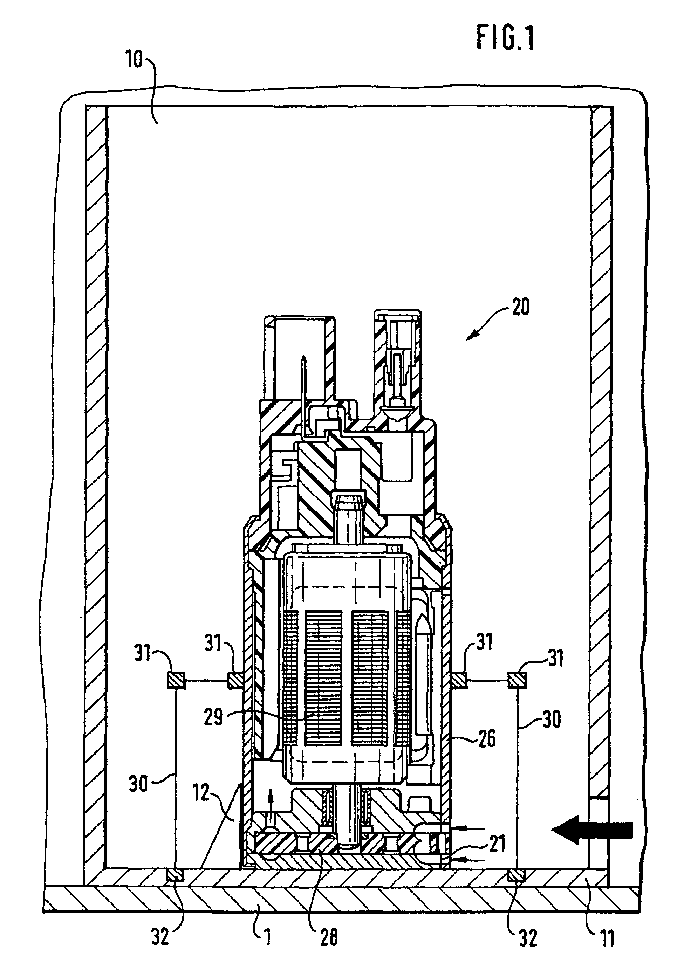

Unter Bezugnahme auf Fig. 1 umfaßt das Kraftstoff-Fördermodul einen Speichertopf 10, der in einem Tank 1 angeordnet ist. Auf einem Boden 11 des Speichertopfes 10 befindet sich eine Kraftstoffpumpe 20, die eine Verbrennungskraftmaschine (nicht dargestellt) mit Kraftstoff versorgt. Der Kraftstoff wird, wie mit einem schwarzen Pfeil unten rechts in Fig. 1 schematisch angedeutet, über eine Saugpumpe o.ä. (nicht dargestellt) aus dem Tank 1 in den Speichertopf 10 befördert. Die Kraftstoffpumpe 20 umfaßt einen elektrischen Motor 29, der ein darunter gelegenes Pumpenelement in Form eines Pumpenrades 28 antreibt. Neben diesem Aufbau sind jedoch auch Pumpenkonstruktionen mit Membranen oder anderen Pumpmechanismen zur Förderung des Kraftstoffs denkbar.

Sowohl der Antriebsmotor 29 als auch das Pumpenrad 28 sind nach außen hin von einem Gehäuse 26 der Kraftstoffpumpe 20 umgeben. Auf seiner rechten Seite weist das Gehäuse 26 eine seitliche Einströmöffnung 21 für das Pumpenrad 28 auf, durch die der Kraftstoff im Betrieb seitlich dem Pumpenrad 28 zuströmt. Die Einströmöffnung 21 ist dabei im unteren Bereich des Speichertopfes 10 angeordnet. Gemäß der in Fig. 1 gezeigten bevorzugten Ausführungsform wird die Einströmöffnung 21 an ihrer unteren Seite durch einen Teil des Gehäuses 26 begrenzt. Durch den beschriebenen Aufbau wird auch noch bei niedrigsten Kraftstoffpegeln im Speichertopf 10 Kraftstoff angesaugt. Ein separater Ansaugstutzen wird nicht benötigt.

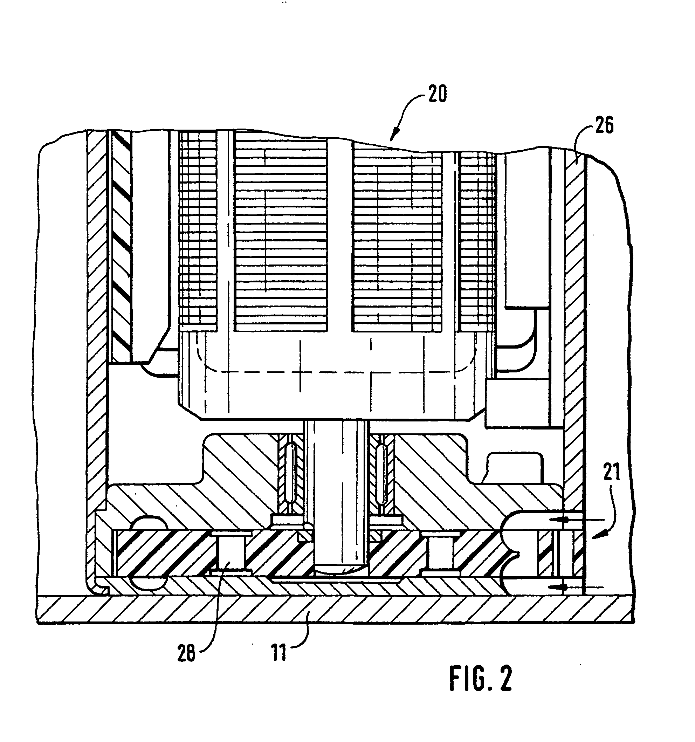

Gemäß einer weiteren Ausführungsform der Erfindung, die in Fig. 2 vergrößert dargestellt ist, ist die Einströmöffnung 21 unmittelbar am Boden des Speichertopfes 10 angeordnet. Das Restabsaugverhalten des Kraftstoff-Fördermoduls wird dadurch weiter optimiert.

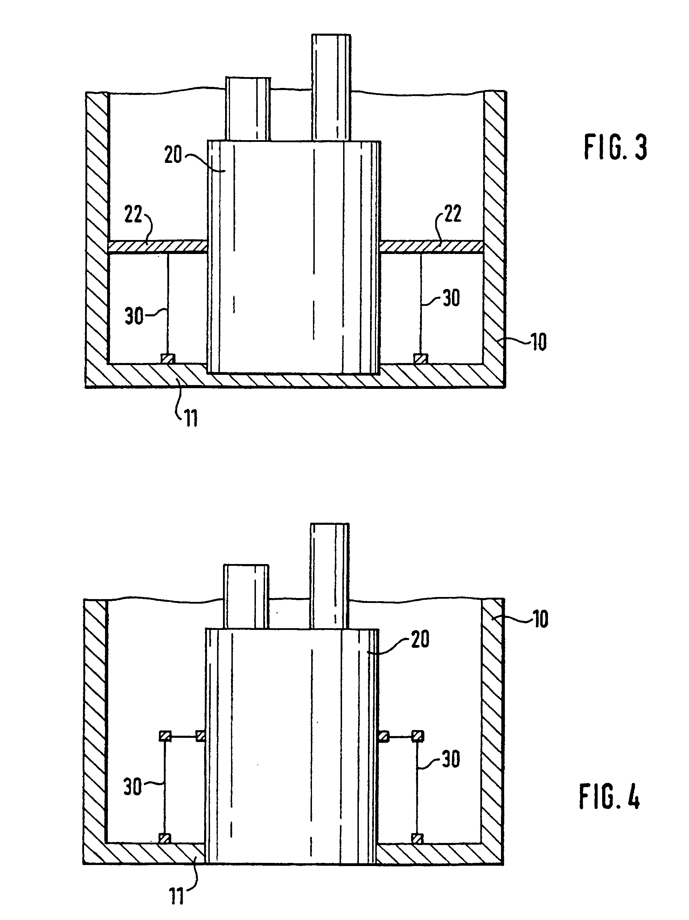

In der in Fig. 3 schematisch dargestellten Ausführungsform ist das Pumpenrad 28 ferner in einer Vertiefung des Bodens 11 des Speichertopfes 10 angeordnet. Damit wird erreicht, daß sich kleine Restmengen an Kraftstoff um das Pumpenrad 28 herum und damit vor der Einströmöffnung 21 sammeln.

Gemäß einer weiteren, in Fig. 4 schematisch dargestellten Ausführungsform, ist das Pumpenrad 28 in einer Aussparung des Bodens 11 des Speichertopfes 10 angeordnet. Dadurch wird der gleiche Effekt wie bei der Ausführungsform in Fig. 3 erzielt, zusätzlich jedoch die Bauhöhe des Kraftstoffmoduls noch weiter verringert und Material eingespart.

Unter erneuter Bezugnahme auf Fig. 1 ist bevorzugt um den unteren Bereich der Kraftstoffpumpe 20 herum ein (Grob-) Filter 30 angeordnet. Dieser Filter 30 verhindert, daß Verunreinigungen des Kraftstoffs oder Ablagerungen in die Kraftstoffpumpe gelangen können. Der Filter 30 ist dabei bevorzugt als Korbfilter ausgebildet. Durch die kreisförmige Anordnung um die Kraftstoffpumpe 20 herum wird eine große Filterfläche möglich, so daß die Standzeit erhöht wird und ein Auswechseln des Filters 30 während der durchschnittlichen Lebensdauer eines Fahrzeuges nicht notwendig ist. Dies ist ein wesentlicher Vorteil gegenüber bekannten Kraftstoff-Fördermodulen, bei denen sich der vergleichsweise kleine Grobfilter unterhalb der Kraftstoffpumpe 20 befindet, wodurch eine Auswechslung eines verstopften Filters aufgrund der notwendigen Demontage der Kraftstoffpumpe zu erheblichem Aufwand und Kosten führt.

Gemäß der in den Fig. 1 und 4 gezeigten bevorzugten Ausführungsformen dient der Korbfilter 30 ferner zur Abstützung der Kraftstoffpumpe 20 im ihrem oberen Bereich. Um die dafür notwendige Stabilität zu erreichen, umfaßt der Korbfilter 30 mehrere Verstärkungselemente 31. Zur Befestigung wird der Korbfilter 30 in korrespondierende Aufnahmeelemente 32 im Boden 11 des Speichertopfes 10 eingesteckt. Die Verbindung kann dabei durch Verrasten, Verkleben oder ähnliche Methoden erfolgen.

Gemäß der in Fig. 3 gezeigten Ausführungsform befinden sich zwischen der Kraftstoffpumpe 20 und den Außenwänden des Speichertopfs 10 zur Abstützung Verstrebungen 22. Diese Verstrebungen sind bevorzugt federnd aufgebaut, um zu verhindern, daß Vibrationen, die von der Kraftstoffpumpe ausgehen, auf den Speichertopf und damit auf den Tank des Fahrzeugs übertragen werden. In dieser Ausführungsform ist der Filter 30 an seiner Oberkante an den Verstrebungen 22 befestigt.

Bevorzugt sind zur Befestigung der Kraftstoffpumpe 20 am Boden 11 des Speichertopfes 10 mehrere Rippen 12 vorgesehen (vergl. Fig. 1), die sich schräg nach oben verjüngen. Dadurch wird die Aufhängung der Kraftstoffpumpe 20 versteift, um den mechanischen Belastungen, die von Vibrationen der Kraftstoffpumpe 20 ausgehen, besser standhalten zu können. Alternativ dazu wird die Kraftstoffpumpe 20 mit einem auf dem Boden 11 des Speichertopfs 10 umlaufenden Ring (nicht dargestellt) fixiert, der im Bereich der Einströmöffnung 21 durchbrochen ist. Denkbare Verbindungssmethoden für die Befestigung an den Rippen bzw. dem Ring sind Verschrauben, Vernieten, Verrasten, Verkleben oder ähnliche bekannte Techniken.

Als Material wird für den Speichertopf, die Befestigungsrippen bzw. den Befestigungsring der Kraftstoffpumpe und die Verstrebungen in der Ausführungsform gemäß Fig. 3 vorzugsweise ein kraftstoffresistenter Kunststoff verwendet, um Kosten und Gewicht zu sparen.

## Patentansprüche

1. Kraftstoff-Fördermodul zur Förderung von Kraftstoff in einer Verbrennungskraftmaschine, insbesondere zur Verwendung in einem Kraftfahrzeug, mit einem Speichertopf (10), der einen Boden (11) aufweist, mit einer in dem Speichertopf (10) angeordneten Kraftstoffpumpe (20) mit einem Pumpenrad (28); wobei das Pumpenrad (28) der Kraftstoffpumpe (20) auf dem Boden (11) des Speichertopfs (10) so angeordnet ist, dass der Kraftstoff seitlich dem Pumpenrad (28) zuströmt, **dadurch gekennzeichnet, dass** das Pumpenrad (28) in einer Vertiefung oder Aussparung des Bodens (11) des Speichertopfes (10) angeordnet ist.

2. Kraftstoff-Fördermodul nach Anspruch 1, bei dem die Kraftstoffpumpe ein Gehäuse (26) umfasst, das eine seitliche Einströmöffnung (21) für das Pumpenrad (28) aufweist, die im unteren Bereich des Speichertopfes (10) angeordnet ist.

3. Kraftstoff-Fördermodul nach Anspruch 2, bei dem die Einströmöffnung (21) des Gehäuses (26) unmittelbar am Boden (11) des Speichertopfes (10) angeordnet ist.

4. Kraftstoff-Fördermodul gemäß Anspruch 2, bei dem die Einströmöffnung (21) an ihrer Unterseite von einem Teil des Gehäuses (26) der Kraftstoffpumpe (20) begrenzt wird.

5. Kraftstoff-Fördermodul nach einem der vorhergehenden Ansprüche, bei dem ferner ein Filter (30) im Speichertopf (10) angeordnet ist, um den Kraftstoff vor dem Einströmen zu filtern.

6. Kraftstoff-Fördermodul nach Anspruch 5, bei dem der Filter (30) als ein Korbfilter ausgebildet ist, das die Kraftstoffpumpe (20) umgibt.

7. Kraftstoff-Fördermodul nach Anspruch 6, bei dem der Korbifilter (30) die Kraftstoffpumpe (20) im Speichertopf (10) abstützt.

8. Kraftstoff-Fördermodul nach Anspruch 6 oder 7, bei dem der Korbfilter (30) direkt auf dem Boden (11) des Speichertopfs (10) aufsitzt.

9. Kraftstoff-Fördermodul nach einem der vorhergehenden Ansprüche, bei dem die Kraftstoffpumpe (12) mittels Rippen (12) am Boden des Speichertopfs (10) befestigt ist.

10. Kraftstoff-Fördermodul nach einem der vorhergehenden Ansprüche, bei dem die Kraftstoffpumpe (20) mittels eines umlaufenden Ringes mit einer Aussparung an der Einströmöffnung (21) am Boden (11) des Speichertopfs (10) befestigt ist.

11. Tank, insbesondere zur Verwendung in einem Kraftfahrzeug, wobei der Tank ein Kraftstoff-Fördermodul gemäß einem der Ansprüche 1 bis 10 aufweist.

## Claims

1. Fuel supply module for supplying fuel in an internal combustion engine, in particular for use in a motor vehicle, having a storage cup (10) which has a bottom (11), having a fuel pump (20) which is arranged in the storage cup (10) and has a pump wheel (28); wherein the pump wheel (28) of the fuel pump (20) is arranged on the bottom (11) of the storage cup (10) in such a way that the fuel flows laterally against the pump wheel (28), **characterized in that** the pump wheel (28) is arranged in a depression or recess in the bottom (11) of the storage cup (10).

2. Fuel supply module according to Claim 1, in which the fuel pump comprises a housing (26) which has a lateral inflow opening (21) for the pump wheel (28), which opening is arranged in the lower region of the storage cup (10).

3. Fuel supply module according to Claim 2, in which the inflow (21) of the housing (26) is arranged directly on the bottom (11) of the storage cup (10).

4. Fuel supply module according to Claim 2, in which the inflow opening (21) on the underside is bounded by part of the housing (26) of the fuel pump (20).

5. Fuel supply module according to one of the preceding claims, in which a filter (30) is also arranged in the storage cup (10) in order to filter the fuel before it flows in.

6. Fuel supply module according to Claim 5, in which the filter (30) is embodied as a basket filter which surrounds the fuel pump (20).

7. Fuel supply module according to Claim 6, in which the basket filter (30) supports the fuel pump (20) in the storage cup (10).

8. Fuel supply module according to Claim 6 or 7, in which the basket filter (30) is seated directly on the bottom (11) of the storage cup (10).

9. Fuel supply module according to one of the preceding claims, in which the fuel pump (20) is attached to the bottom of the storage cup (10) by means of ribs (12).

10. Fuel supply module according to one of the preceding claims, in which the fuel pump (20) is attached to the bottom (11) of the storage cup (10) by means of a circumferential ring with a recess on the inflow opening (21).

11. Tank, in particular for use in a motor vehicle, wherein the tank has a fuel supply module according to one of Claims 1 to 10.

## Revendications

1. Module d'alimentation en carburant pour fournir du carburant à un moteur à combustion interne, notamment appliqué à un véhicule automobile comportant un pot accumulateur (10) muni d'un fond (11), d'une pompe à carburant (20) installée dans le pot (10), cette pompe ayant un rotor (28) installé au niveau du fond (11) du pot (10) de façon que le carburant arrive latéralement vers le rotor (28),
**caractérisé en ce que**
le rotor (28) est logé dans une cavité ou découpe du fond (11) du pot accumulateur (10).

2. Module d'alimentation en carburant selon la revendication 1,
**caractérisé en ce que**
la pompe à carburant comprend un boîtier (26) muni d'une ouverture d'entrée (21) latérale pour le rotor de pompe (28) installé dans la zone inférieure du pot (10).

3. Module d'alimentation en carburant selon la revendication 2,
**caractérisé en ce que**
l'orifice d'entrée (21) du boîtier (26) se trouve directement au fond (11) du pot (10).

4. Module d'alimentation en carburant selon la revendication 2,
**caractérisé en ce que**
l'orifice d'entrée (21) est délimité au niveau de sa face inférieure par une partie du boîtier (26) de la pompe à carburant (20).

5. Module d'alimentation en carburant selon l'une des revendications précédentes,
**caractérisé en ce qu'**
il comporte en outre un filtre (30) installé dans le pot (10) pour filtrer le carburant avant son entrée.

6. Module d'alimentation en carburant selon la revendication 5,
**caractérisé en ce que**
le filtre (30) est un filtre en forme de panier entourant la pompe à carburant (20).

7. Module d'alimentation en carburant selon la revendication 6,
**caractérisé en ce que**
le filtre en forme de panier (30) soutient la pompe à carburant (20) dans le pot (10).

8. Module d'alimentation en carburant selon la revendication 6 ou 7,
**caractérisé en ce que**
le filtre en forme de panier (30) repose directement sur le fond (11) du pot (10).

9. Module d'alimentation en carburant selon l'une des revendications précédentes,
**caractérisé en ce que**
la pompe à carburant (12) est fixée par des nervures (12) au fond du pot (10).

10. Module d'alimentation en carburant selon l'une des revendications précédentes,
**caractérisé en ce que**
la pompe à carburant (20) est fixée par l'intermédiaire d'un anneau périphérique à une découpe dans l'orifice d'entrée (21) du fond (11) du pot (10).

11. Réservoir notamment applicable à un véhicule automobile et comportant un module d'alimentation en carburant selon l'une des revendications 1 à 10.
